# EUROPÄISCHE PATENTANMELDUNG

(11) **EP 4 693 835 A1**
(43) Veröffentlichungstag der Anmeldung: **11.02.2026**
(21) Anmeldenummer: 24192867.0
(22) Anmeldetag: 05.08.2024
(51) Int. Cl.: H02K 3/30, H02K 3/38, H02K 3/44, H02K 15/12

(54) **VERFAHREN ZUR HERSTELLUNG EINES WICKELKOPFSCHUTZES EINES STATORS DURCH TRÄUFELBESCHICHTUNG**

(71) Anmelder: Innomotics GmbH, 90441 Nürnberg (DE)
(72) Erfinder: Katzenberger, Tobias, 97631 Bad Königshofen STT Untereßfeld (DE); Schirm, Dieter, 96149 Breitengüßbach (DE)
(74) Vertreter: Michalski Hüttermann & Partner Patentanwälte mbB

(57) **Zusammenfassung**

Verfahren zum Herstellen eines Stators (2) einer dynamoelektrischen rotatorischen Maschine (1), durch folgende Schritte:
- Bereitstellen eines Blechpakets (3) des Stators (2), aus vorzugsweise stanzpaketierten Blechen, das ein in im Wesentlichen axial verlaufenden Nuten (13) angeordnetes Wicklungssystem (12) aufweist, das an den Stirnseiten (4) des Blechpakets (3) jeweils einen Wickelkopf (5) aufweist, der aus den jeweils aus den Nuten (13) axial austretenden Abschnitten des Wicklungssystems (12) gebildet ist, wobei das Wicklungssystem (12) aus Drähten gebildet ist, das Zwischenräume (17) aufweist,
- Imprägnieren des Wicklungssystems (12) innerhalb der Nuten (13) und des Wickelkopfes (5), wobei die Nuten (13) und den Wickelkopf (5) mit einem Imprägniermaterial beaufschlagt werden,
- an die Imprägnierung schließt sich (unmittelbar) eine ausschließlich auf die Wickelköpfe (5) beschränkte Träufelbeschichtung eines oder beider Wickelköpfe (5) an, wobei die Statoren (2) und/oder Träufeldüsen (19) derartig bewegt werden, dass die Wickelköpfe (5) mit einer vorgebbaren Schichtdicke (20) versehen werden.

## Beschreibung

Die Erfindung betrifft ein Verfahren zur Herstellung eines Wickelkopfschutzes eines Stators einer dynamoelektrischen Maschine, einen Stator, hergestellt nach diesem Verfahren, eine dynamoelektrische Maschine mit einem derartigen Stator, als auch die Verwendung einer derartigen dynamoelektrischen Maschine.

Dynamoelektrische Maschine weisen vor allen in ihrem Stator ein in Nuten des Stators angeordnetes Wicklungssystem auf. Das Wicklungssystem ist dabei u.a. aus unterschiedlichsten Arten von Drähten aufgebaut. Bei einer Stator-Runddraht-Wicklung eines Niederspannungs-Elektromotors (typische Industriemotoren und E-Mobility-Motoren bis 1 kV) z.B. wird für die Imprägnierung üblicherweise in ein flüssiges Reaktivharz getaucht und bei Temperaturen von bis zu 160°C ausgehärtet. Die Imprägniertechnologie ist in den allermeisten Fällen in einem Heißtauch- oder Kalttauchverfahren, Stand der Technik sind hier beispielsweise Strom-Wärme-Imprägnierprozesse oder Dip-and-Bake-Prozesse (Kalt-Tauch-Verfahren mit Ofenhärtung), die als kontinuierliche Prozesse Anwendung finden. Je nach Anforderung an die Imprägnierqualität ist aber auch ein Vakuum-Druck-Imprägnierverfahren denkbar, welches als Batch-Prozess ausgeführt ist. Dabei werden die Statoren einzeln nacheinander abgearbeitet bzw. imprägniert.

In all diesen Verfahren kommen vorzugsweise einkomponentige Harzsysteme auf Basis ungesättigter Polyester oder Polyesterimid-Copolymerisaten zum Einsatz, übliche Building Blocks sind beispielsweise Maleinsäure-, Phthalsäure- und Glykolderivate. Als Building Blocks werden Synthesechemikalien bezeichnet, die zur Herstellung weiterer Verbindungen bzw. Materialien dienen. Um sie Verarbeitungsfertig einzustellen werden sie noch additiviert mit z.B. Reaktivverdünnern (Styrol, Acrylate, etc.), Initiatoren, Stabilisatoren, etc.. Diese Harzsysteme zeichnen sich durch eine sehr gute Prozessstabilität, sowie einer sehr guten elektrischen und thermischen Beständigkeit aus. So haben die meisten Harzsysteme einen Temperaturindex von 180-200°C, insbesondere bei Harzsystemen mit Polyesterimid-Copolymerisaten als Rückgrat sind auch Temperaturindizes von größer 200°C realisierbar.

Allerdings haben diese Materialien auch technische Schwachstellen und bieten nur einen geringen Schutz gegen erhöhten äußeren Einfluss. Dazu gehört die erhöhte Beständigkeit gegen Wasser (Betauung), Öl (z.B. Getriebeöl), Schmutz sowohl als auch die Kombination daraus. Insbesondere Schmutz- bzw. Schmutzpartikel können besonders die Imprägnierschicht am exponierten Wickelkopf beeinträchtigen.

Aufgrund der im Polymer-Rückgrat enthaltenen Ester-Strukturen, können die Harze hydrolytisch gespalten werden. Die Beständigkeit gegen Wasser-ÖI-Mischungen unter Temperatureinwirkung ist hier als Schwachstelle auszumachen, insbesondere wenn die Öl Schwefelsäure- oder Phosphorsäure-bildenden Additive beinhalten. Dies sind als Tribologie-Additive üblich. Das saure Milieu katalysiert die hydrolytische Esterspaltung.

Ein somit erforderlicher zusätzlicher Wickelkopfschutz auf bereits imprägnierten Statoren erfolgt bisher durch eine zusätzliche Tauchimprägnierung oder Tauchlackierung. Dabei muss der Stator zuerst vom eigentlichen Imprägnierprozess abkühlen, um dann bei Raumtemperatur in den Schutzlack bzw. Imprägnierung getaucht zu werden. Anschließend muss der Stator wieder für mehrere Stunden bei ca. 150°C getrocknet bzw. ausgehärtet werden. Der Energieverbrauch dabei ist enorm, ebenso der Zeitaufwand durch die Wartezeiten des Abkühlens und die Ofenzeiten. Zudem wird sehr viel Energie verschwendet, da keine Restwärme von vorherigen Prozessen genutzt werden kann.

Auch benötigt es für diesen Prozess ein eigenes sehr aufwändiges Fertigungsequipment (Tauchbad, Handling, Ofen- und Abkühlstrecke). In Summe sind mit diesem Prozess durch die hohen Aufwände und Zeiten auch hohe Kosten in der Fertigung verbunden. Hinzu kommt noch der enorme Reinigungsaufwand, an den Innen- und Außendurchmessern der Statoren. Denn durch den Tauchvorgang werden alle - auch die nicht zu beaufschlagenden Bereiche - mit dem Material benetzt. Diese Bereiche sind beispielsweise der Stator-Innendurchmesser oder Stator-Außendurchmesser. Zudem können sich Tropfnasen am Wickelkopf bilden, welche ebenfalls entfernt werden müssen.

Um dem entgegenzuwirken, müssen diese Bereiche anschließend gereinigt oder im Vorfeld aufwendig geschützt werden (z.B. durch abkleben).

Bei dem zusätzlichen Tauchprozess muss der durch das Aushärten einer Standard-Imprägnierung aufgeheizte Stator zunächst von ca. 150°C auf Raumtemperatur abkühlen oder gar abgekühlt werden. Anschließend kann er wieder in ein separates Tauchbecken mit einem speziellen Harz oder Lack, welches/r die Beständigkeit gegen z.B. Feuchte und Öl aufweist, getaucht und dann wiederum im Ofen bei hohen Temperaturen (150°C) für mehrere Stunden getrocknet werden.

Mit diesem Prozess und den hierfür verfügbaren Materialien sind jedoch einige Nachteile verbunden.

Es stellt sich ein vergleichsweise hoher Energieverbrauch durch das mehrmalige Aushärten der Wicklung ein. Es ist ein hoher Zeitaufwand durch die Abkühlzeiten und damit verbundenen Wartezeiten, als auch den langen Ofenzeiten erforderlich. Durch den Tauchprozess ergibt sich am Wickelkopf eine undefinierte Beschichtungsdicke. Es ist lediglich außerdem nur eine vergleichsweise geringe Automatisierbarkeit dieses Tauchprozesses möglich. Außerdem ist ein hoher Reinigungsaufwand z.B. der Statorbohrung oder Teilen der Statorbohrung notwendig, die bei dem Tauchprozess unwillkürlich ebenfalls beschichtet werden. Durch den Tauchprozess ergeben sich lediglich vergleichsweise geringe und damit unzureichende Schichtdicken auf dem zu beschichteten Wickelkopf. Zudem sind diese Schichtdicken durch den Tauchprozess nicht einstell- oder reproduzierbar.

Diese bisherigen Verfahren zur Ausbildung eines Wickelkopfschutzes führen zu erhöhten Emissionen von VOC (Flüchtige organische Verbindungen, volatile organic compounds). Dies ist die Sammelbezeichnung für organische, also kohlenstoffhaltige Stoffe, die bei Raumtemperatur oder höheren Temperaturen durch Verdampfen in die Gasphase übergehen, also flüchtig sind. Hierbei kann es sich auch um gesundheitsschädliche und/oder umweltschädliche Verbindungen handeln, womit die Verwendung von technischen Schutzmaßnahmen (z.B. Abluftanlagen, Abluftreinigung, etc.) notwendig wird.

Ausgehend davon liegt der Erfindung die Aufgabe zugrunde ein einfaches und kostengünstiges Verfahren zur Herstellung eines Wickelkopfschutzes eines Stators einer dynamoelektrischen Maschine bereitzustellen, das in einfacher Art und Weise an unterschiedlichste Ausführungen der Statoren anpassbar ist.

Die Lösung der gestellten Aufgabe gelingt durch die Merkmale der unabhängigen Ansprüche. Vorteilhafte Ausgestaltungen der Erfindung sind den abhängigen Ansprüchen zu entnehmen.

Um sämtliche Anforderungen an die zusätzliche Beschichtung der Wicklungen, insbesondere des Wickelkopfes zu erfüllen, wird erfindungsgemäß Träufeln angewandt. Durch diese Technologie können nachträglich - also im Anschluss an das Imprägnieren des Stators - entsprechende Materialien hochautomatisiert aufgebracht werden.

Das eigentliche zugrundliegende elektrische Isoliersystem des Wicklungssystems, inklusive der Imprägnierung ist in Bezug auf seine Lebensdauer und seine dielektrische Widerstandsfähigkeit qualifiziert und bewährt. Dies muss nun erfindungsgemäß für die erhöhten Anforderungen (Öl, Wasser, etc.) nicht geändert werden, sondern wird durch das erfindungsgemäße einfache Verfahren mit zusätzlichen Komponenten weiter verbessert.

Vorteilhafterweise wird damit ein aufwändiger Freigabeprozess eines komplett neuen Isoliersystems umgangen und es werden die Vorteile aller Einzel-Komponenten genutzt.

Da die oben genannten Umwelteinflüsse aufgrund der geometrischen Gegebenheiten besonders den exponierten Wickelkopf des Stators schädigen, ist dieser bevorzugt mit einer zusätzlichen Schicht zu schützen. Diese Schicht wird erfindungsgemäß prozesssicher, aufwands- und energiearm und hochautomatisiert aufgebracht.

Die hohe Varianz der Wicklungen der Statoren ist dabei keine Limitierung und eine Materialauswahl kann entsprechend den zu wiederstehenden Umwelteinflüssen vor Beginn der Beschichtung getroffen werden.

Um einen zusätzlichen Schutz der bereits imprägnierten Statoren gegen die oben genannten Umwelteinflüsse bei den Wickelköpfen zu erhalten, eignen sich besonders Beschichtungen, wie Harze oder Lacke auf Epoxidbasis mit aminischer Härtung. Aminische Verbindungen sind übliche Härter für Epoxidharze. Diese Verbindungen erlauben eine Härtung der Epoxidharze bei Raumtemperatur oder moderat erhöhten Temperaturen (unter 80°C). Sie sind daher vorteilhaft für die Erfindung. Der einer aminischen Härtung zugrunde liegende chemische Reaktionsmechanismus ist eine Polyaddition.

Epoxy-Amin-Systeme zeichnen sich durch eine sehr gute Beständigkeit gegenüber Feuchtigkeit und Ölen aus, auch in einem sauren Milieu. Insbesondere bei an einem Motor angeflanschten Getrieben besteht die Gefahr, dass (Getriebe)ÖI zur Wicklung des Stators durchdringt. Anwendungen derartiger Motoren mit angeflanschten getrieben sind z.B. Bahn- oder Busantriebe. Aber auch Rollenantriebe mit Getriebe sind denkbar.

Diese Materialien werden als 2-Kompenentige Varianten (2 K System) eingesetzt, wobei die Verabreichung dieser Materialien durch die Träufeltechnologie erfolgt.

Dabei werden beide Material-Komponenten mittels Pumpen gefördert und in einem statischem Mischrohr vermischt (Harz und Härter) und durch zumindest eine Träufeldüse direkt auf zumindest einen Wickelkopf des rotierenden Stators appliziert. Dieser Prozess erfolgt vorzugsweise bei Raumtemperatur bzw. Umgebungstemperatur. Die Beschichtung in vorgebbarer Schichtdicke erfolgt nur und ausschließlich auf den oder die zu schützenden Wickelköpfe.

Durch Einstellung der Parameter dieses Verfahrens wie z.B. Dosiermenge, Förder-Geschwindigkeit, Rotationsgeschwindigkeit und Drehrichtung des Stators, Position und Anzahl der Träufeldüsen, wird gezielt eine gewünschte Schichtdicke auf die zu beschichteten Flächen des Wickelkopfes geschaffen. So kann stirnseitig am Wickelkopf eine andere Schichtdicke notwendig sein, wie auf der dem Luftspalt zugewandten Seite des Wickelkopfes.

Als Wickelkopf wird dabei der Abschnitt des Wicklungssystems eines Stators oder auch Rotors bezeichnet, der an der Stirnseite des jeweiligen Blechpakets aus der Stirnseite ragt und den oben genannten Umwelteinflüssen ausgesetzt ist. Dabei sind unmittelbar nach dem stirnseitigen Nutaustritt des Wicklungssystems Zwischenräume in der Größenordnung der Breite des Zahnschaftes vorhanden, die durch das Verfahren, bei dementsprechender Wahl der Schichtdicke auch geschlossen werden können.

Die Aushärtung der zusätzlichen Beschichtung der Wickelköpfe erfolgt ohne zusätzlichen Energieeintrag ebenfalls bei Raumtemperatur für ca. 24h durch den Einsatz von raumtemperaturhärtenden 2K-Systemen, welche nur mit der Träufeltechnologie sinnvoll einsetzbar sind.

Um das Ergebnis der Beschichtung weiter zu verbessern und die Aushärtung des Harzes zu beschleunigen, kann eine Temperierung des Blechpakets des Stators auf ca. 60-80°C erforderlich sein.

Um energieeffizient zu agieren, wird vorteilhafterweise die Restwärme der Blechpakete des vorgelagertem Härzezyklus durch das Imprägnieren des Stators genutzt. Die insgesamt eingebrachte Energie wird somit sogar doppelt genutzt.

Alternativ aber ggf. energieaufwändiger kann auch ein nachgelagertes Aushärten im Ofen oder durch induktives Heizen der Statoren den Härteprozess beschleunigen.

Durch die Aufbringungen eines zusätzlichen Wickelkopfschutzes mittels der eingesetzten Träufeltechnolologie mit 2K-Epoxidharzen kann nunmehr der Wickelkopfschutz nachträglich varianzunabhängig der Dimensionen der Blechpakete von Stator und/oder Rotor aufgebracht werden. Vorteilhafterweise kann das zu beschichtende Objekt bei Umgebungstemperatur oder vorzugsweise Restwärme bei bis zu 80 Grad verarbeitet werden.

Eine eigens dafür eingesetzte Ofenhärtung ist somit nicht nötig. Die Nutzung der Restwärme durch vorgelagerte Prozesse beschleunigt jedoch die Härtung in ausreichender Weise.

Des Weiteren ist das erfindungsgemäße Verfahren zur zusätzlichen Beschichtung der Wickelköpfe vollautomatisierbar. Die Schichtdicken sind je Wickelkopf frei wähl- und einstellbar. Ein zweiter aufwändiger Tauchprozess entfällt. Somit entfällt auch eine zusätzliche Reinigung des Stators und der beteiligten Gerätschaften. Die Harzdosierung ist überwachbar (Traceability). Durch die erfindungsgemäße Verarbeitung von Materialien ohne Lösemittel/Verdünnung ist die Vermeidung von VOC-Emissionen möglich.

Die Beschichtung des Wickelkopfes in vorgebbarer Schichtdicke an den verschiedensten Flächendes Wickelkopfes ist nur durch die Träufelbeschichtung in einfacher Art und Weise realisierbar. Die Statorbohrung und die Nuten werden dabei explizit nicht beschichtet. Die für die Träufelimprägnierung technologisch notwendige Bewegung von Träufeldüse und/oder Stator (Rotation oder Taumelbewegung), zu einem gleichmäßig, vorgebbaren Verlauf des applizierten Materials auf dem Wickelkopf, so dass keine Tropfnase entstehen.

Grundsätzlich ist auch vorstellbar die Beschichtung des Wickelkopfes mit einem 1-komponentigen Epoxidharz (1-K-System) zu realisieren. Diese 1 K-Systeme sind auch bei Raumtemperatur ausreichend lagerstabil und könnten durch die Restwärme des Stators aktiviert/gehärtet werden . Ggf. wäre auch eine zeitlich daran nachgeschaltete Ofenhärtung sinnvoll.

Die Erfindung sowie weitere Ausgestaltungen der Erfindung werden anhand prinzipiell dargestellter Ausführungsbeispiele näher erläutert; dabei zeigt:
- FIG 1: einen prinzipiellen Längsschnitt einer dynamolektrischen Maschine,
- FIG 2: eine Detaildarstellung eines Wickelkopfes,
- FIG 3: perspektivische Detaildarstellung eines Wickelkopfes.

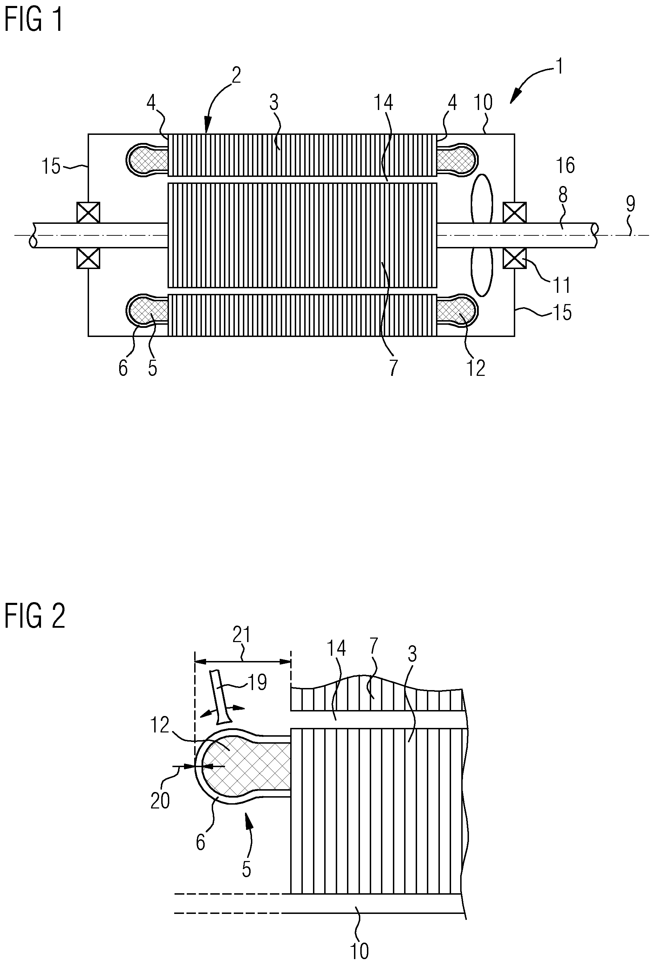

FIG 1 zeigt prinzipiellen Längsschnitt einer dynamoelektrischen rotatorischen Maschine 1. Dabei weist ein Stator 2 ein axial gestapeltes Blechpaket 3 auf, das in zu einem Luftspalt 14 weisenden Nuten 13 ein Wicklungssystem 12 aufweist. Das Wicklungssystem 12 bildet an den Stirnseiten 4 des Blechpaket 3 des Stators 2 Wickelköpfe 5 aus. Das Blechpaket 3 ist in einem Gehäuse 10 angeordnet, das über Lagerschilde 15 und deren Lager 11 eine Welle 8 abstützt, die mit einem Rotor 7 drehfest verbunden ist und um eine Achse 9 drehbar gelagert ist.

Bei Motorbetrieb der dynamoelektrischen rotatorischen elektrischen Maschine 1 wird durch elektromagnetische Wechselwirkung des bestromten Wicklungssystems 12 mit dem Rotor 7, dieser in Drehung versetzt.

Der Wickelkopf 5 ist insbesondere bei einer offenen Maschine den Umwelteinflüssen ausgesetzt. Aber auch bei einer geschlossenen Maschine werden durch einen Lüfter 16 Partikel auf den Wickelkopf 5 beschleunigt, die u.a. dort zu einer Abrasion und damit Beeinträchtigung des Isolationssystems führen können.

Das Wicklungssystems 12 kann ein mehrphasiges, beispielsweise ein dreiphasiges Statorwicklungssystem bilden. Die Wicklungen der einzelnen Phasen werden in der Regel sequenziell nacheinander in die Nuten 13 eingebracht.

Die Wicklungen des Wicklungssystems 12 können nach Bedarf als sogenannte wilde Wicklungen oder als sogenannte gelegte Wicklungen ausgebildet sein. Die Wicklungen sind z.B. als Runddrähte, Lackdrähte ausgeführt und können beispielsweise als Kupferstränge aus einer Vielzahl von Kupferdrähten gebildet sein.

Der Wickelkopf 5 wird dabei durch die aus den Abschnitten des Wicklungssystems 12 gebildet, die auf der Stirnseite 4 des Blechpakets austreten bzw. wieder in diese Stirnseite 4 eintreten. Die Abschnitte werden in der Regel zusammengefasst oder zusammengebunden. Das Zusammenbinden kann beispielsweise mit einem Klebeband o.Ä. erfolgen.

Als Wickelkopf 5 wird somit der Abschnitt des Wicklungssystems 12 des Stators 2 oder auch des Rotors 7 bezeichnet, der an der Stirnseite 4 des jeweiligen Blechpakets aus der Stirnseite ragt und den oben genannten Umwelteinflüssen ausgesetzt ist. Dabei sind unmittelbar nach dem stirnseitigen Nutaustritt des Wicklungssystems 12 Zwischenräume 17 in der Größenordnung der Breite des Zahnschaftes 18 vorhanden, die durch das Verfahren, bei dementsprechender Schichtdicke der Beschichtung 6 auch geschlossen werden können.

Um einen zusätzlichen Schutz der bereits imprägnierten Statoren 2 gegen die oben genannten Umwelteinflüsse an den Wickelköpfen 5 zu erhalten, wird die Beschichtung 6, mit Harzen oder Lacken auf Epoxidbasis mit aminischer Härtung durchgeführt. Epoxy-Amin-Systeme zeichnen sich durch eine sehr gute Beständigkeit gegenüber Feuchtigkeit und Ölen aus, was die Einsatzgebiete der dynamoelektrischen Maschinen 1 entscheidend sein kann.

Diese Materialien werden als 2-Kompenentige Varianten (2 K System) eingesetzt, wobei die Verabreichung dieser Materialien durch die Träufeltechnologie erfolgt.

Dabei werden beide Material-Komponenten mittels Pumpen gefördert und in einem statischem Mischrohr vermischt (Harz und Härter) und durch zumindest eine Träufeldüse 19 in einem vorgebbaren Abstand direkt auf zumindest einen Wickelkopf 5 des rotierenden Stators 2 appliziert. Dieser Prozess erfolgt vorzugsweise bei Raumtemperatur bzw. Umgebungstemperatur. Die Beschichtung 6 in einer jeweils vorgebbaren Schichtdicke 20 erfolgt nur und ausschließlich auf den zu schützenden Wickelkopf 5 von Stator 2 und/oder Rotor 7.

Durch Einstellung der Parameter dieses Träufel-Verfahrens, wie z.B. Dosiermenge, Förder-Geschwindigkeit, Rotationsgeschwindigkeit und Drehrichtung des Stators 2, Position und Anzahl der Träufeldüsen 19, Abstand zum Wickelkopf 5, wird gezielt eine gewünschte Schichtdicke 20 auf die zu beschichteten Flächen des Wickelkopfes 5 geschaffen. Das Wicklungssystem 12, insbesondere der Wickelkopf 5 kann dabei bei Umgebungstemperatur oder auch warm (<100 Grad) bearbeitet werden. Die Träufelung bei warmen Statoren 2 (<100°C) sind vorteilhaft für die Harzverteilung insbesondere auf dem Wickelkopf 5 und ermöglichen so eine schnellere Applikation des Harzes.

Eine zusätzliche Ofenhärtung der aufgebrachten Beschichtung 6 ist ebenfalls nicht notwendig. Die Nutzung der Restwärme durch vorgelagerte (Imprägnier-) Prozesse kann jedoch vorteilhafterweise die Härtung beschleunigen.

Bei der Aufbringung dieser weiteren Beschichtung 6 auf den Wickelkopf 5, um nunmehr gegen äußere Einflüsse geschützt zu sein, werden deutlich kürzere Zykluszeiten als bei den bisherigen Verfahren benötigt.

Es muss weniger Prozessenergie aufgebracht werden und es kann sogar die Restwärme der vorgelagerten Ofenprozessen des Imprägniervorgangs des Stators 2 genutzt werden. Des weiteren werden durch die Möglichkeit der Automatisierung dieses Träufelverfahrens weitere Aufwände reduziert werden. Zusätzlich kann dieser Wickelkopfschutz nachträglich bei nahezu beliebigem Stator 2 - also varianzunabhängig von Wicklungssystem 12, axialer Ausladung 21 des Wickelkopfes 5, Länge und Durchmesser des Blechpakets 2 - aufgebracht werden.

FIG 2 zeigt in einer Detaildarstellung einen Wickelkopf 5 der aus der Stirnsite 4 des Blechpakets 3 des Stators ragt. Die Beschichtung 6 setzt somit lückenlos am Blechpaket 3 an. Die Schichtdicke 20 der Beschichtung 6 kann auch an einem Wickekopf 5 variieren. Prinzipiell ist eine Träufeldüse 19 dargestellt, mittels der das 2-K-Material auf den Wickelkopf 5 appliziert wird.

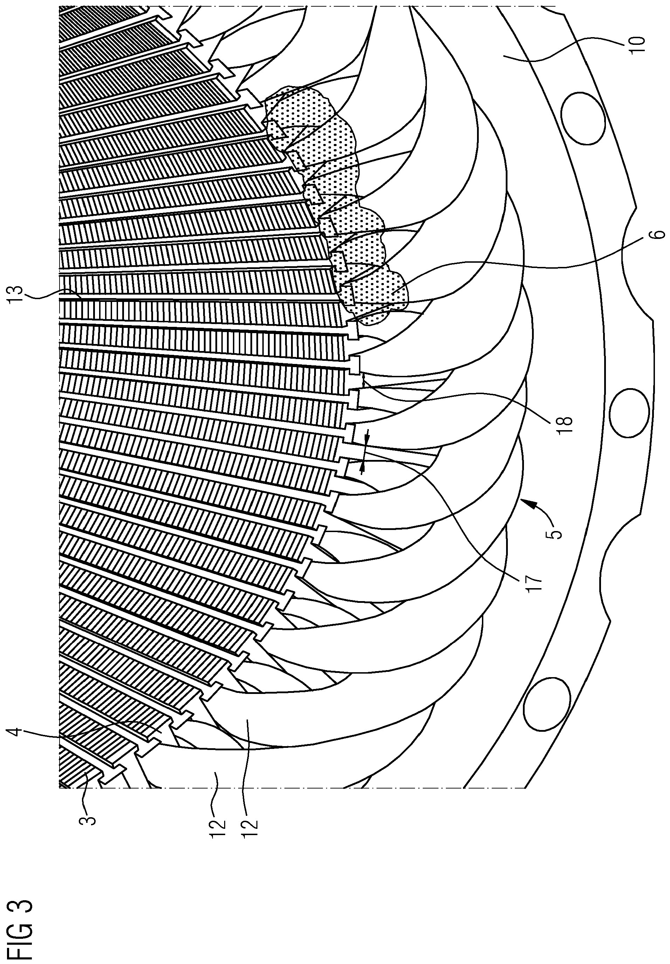

FIG 3 zeigt in einer perspektivischen Detaildarstellung den Wickelkopf 5, der sich aus den Abschnitten des Wicklungssystems 12 ergibt, das aus der Stirnseite 4 des Blechpakets 3 ragt. Durch die Beschichtung 6 können sogar mittels des erfindungsgemäßen Träufelverfahrens die Zwischenräume 17 zwischen den Nutaustritten des Wicklungssystems 12 geschlossen werden. Diese Zwischenräume 17 sind umfänglich jeweils maximal so breit wie ein Zahn, der sich zwischen zwei benachbarten Nuten 13 befindet.

Die dynamoelektrischen Maschine 1 mit einem derartigen Stator 2 wird insbesondere im industriellen Umfeld, in der Verkehrstechnik, der Lebensmittelindustrie, als auch der Verfahrenstechnik als Antrieb für einen Kompressor, Lüfter, eine Pumpe oder einen Verdichter verwendet.

### Bezugszeichenliste

- 1: dynamoelektrische Maschine
- 2: Stator
- 3: Blechpaket des Stators
- 4: Stirnseite Statorblechpaket
- 5: Wickelkopf
- 6: Beschichtung Wickelkopf
- 7: Rotor
- 8: Welle
- 9: Achse
- 10: Gehäuse
- 11: Lager
- 12: Wicklungssystem
- 13: Nut
- 14: Luftspalt
- 15: Lagerschild
- 16: Lüfter
- 17: Zwischenraum
- 18: Zahnschaft
- 19: Träufeldüse
- 20: Schichtdicke
- 21: axiale Ausladung

## Patentansprüche

1. Verfahren zum Herstellen eines Stators (2) einer dynamoelektrischen rotatorischen Maschine (1), durch folgende Schritte:
- Bereitstellen eines Blechpakets (3) des Stators (2), aus vorzugsweise stanzpaketierten Blechen, das ein in im Wesentlichen axial verlaufenden Nuten (13) angeordnetes Wicklungssystem (12) aufweist, das an den Stirnseiten (4) des Blechpakets (3) jeweils einen Wickelkopf (5) aufweist, der aus den jeweils aus den Nuten (13) axial austretenden Abschnitten des Wicklungssystems (12) gebildet ist, wobei das Wicklungssystem (12) aus Drähten gebildet ist, das Zwischenräume (17) aufweist,
- Imprägnieren des Wicklungssystems (12) innerhalb der Nuten (13) und des Wickelkopfes (5), wobei die Nuten (13) und den Wickelkopf (5) mit einem Imprägniermaterial beaufschlagt werden,
- an die Imprägnierung schließt sich (unmittelbar) eine ausschließlich auf die Wickelköpfe (5) beschränkte Träufelbeschichtung eines oder beider Wickelköpfe (5) an, wobei die Statoren (2) und/oder Träufeldüsen (19) derartig bewegt werden, dass die Wickelköpfe (5) mit einer vorgebbaren Schichtdicke (20) versehen werden.

2. Verfahren nach Anspruch 1, **dadurch gekennzeichnet, dass** als Träufelmaterial vorzugsweise ein 2-Komponentiges-Epoxidharz verwendet wird, wobei beide Komponenten mittels Pumpen gefördert und in einem statischem Mischrohr vermischt (Harz und Härter) und durch eine Träufeldüse (19) direkt auf die Wickelköpfe (5) des rotierenden Stators (2) appliziert werden.

3. Verfahren nach Anspruch 1 oder 2, **dadurch gekennzeichnet, dass** der Träufelprozesss Prozess bei unter 80 Grad, vorzugsweise bei Raumtemperatur erfolgt.

4. Verfahren nach einem der vorhergehenden Ansprüche, **dadurch gekennzeichnet, dass** die Träufelbeschichtung mittels Harzen oder Lacken auf Epoxidbasis mit aminischer Härtung durchgeführt wird.

5. Verfahren nach einem der vorhergehenden Ansprüche, **dadurch gekennzeichnet, dass** während des Erzeugens des Beschichtungsmaterials die Träufeldüse (19) und/der der Stator (2) derart bewegt werden, dass das Beschichtungsmaterial durch eine rollierende Bewegung des Stators (2) und/oder einer Verfahrbewegung der Träufeldüse (19) schichtweise und flächendeckend auf den Wickelkopf (5) in vorgebbarer Art und Weise aufgetragen wird.

6. Verfahren nach einem der vorhergehenden Ansprüche, **dadurch gekennzeichnet, dass** alle Zwischenräume (17) mit der Beschichtung (6) geschlossen werden.

7. Verfahren nach einem der vorhergehenden Ansprüche, **dadurch gekennzeichnet, dass** die Beschichtung (6) die gesamten Wickelköpfe (5) umschließt, wobei die Schichtdicke (20) in den Bereichen des jeweiligen Wickelkopfes (5) größer aufgetragen wird, die einer besonderen Beanspruchung dieser äußeren Einflüsse ausgesetzt sind, insbesondere wo mit Abrasion des Wickelkopfes (5) im Betrieb der dynamoelektrischen Maschine (1) zu rechnen ist.

8. Verfahren nach einem der vorhergehenden Ansprüche, **dadurch gekennzeichnet, dass** das Auftragen der Beschichtung (6) des Wickelkopfes (5) vollautomatisch, insbesondere mit einem zumindest eine Träufeldüse (19) aufweisenden Roboter erfolgt.

9. Stator (2) mit einem Wicklungssystem (12), das an Stirnseiten (4) seines Blechpakets (3) Wickelköpfe (5) ausbildet, die Beschichtung (6) aufweisen, die nach einem Verfahren nach Anspruch 1 bis 8 aufgebracht wurde.

10. Dynamoelektrische Maschine (1) mit einem Stator (2) nach Anspruch 9.

11. Verwendung einer dynamoelektrischen Maschine (1) in einem industriellen Umfeld, in der Verkehrstechnik, der Lebensmittelindustrie, als auch der Verfahrenstechnik, als Antrieb für einen Kompressor, Lüfter, eine Pumpe oder einen Verdichter.
